# EUROPÄISCHE PATENTSCHRIFT

(11) **EP 1 658 743 B1**
(45) Veröffentlichungstag und Bekanntmachung des Hinweises auf die Patenterteilung: **23.01.2019**
(21) Anmeldenummer: 04766633.4
(22) Anmeldetag: 27.08.2004
(51) Int. Cl.: H04M 1/725, H04W 8/24

(54) **VERFAHREN, EINRICHTUNG UND SYSTEM ZUR REGELGESTEUERTEN VERZÖGERTEN AUSFÜHRUNG VON SOFTWARE-DOWNLOAD**
METHOD, DEVICE AND SYSTEM FOR THE RULE-CONTROLLED, DELAYED EXECUTION OF SOFTWARE DOWNLOADS
PROCÉDÉ, DISPOSITIF ET SYSTÈME POUR L'EXECUTION RETARDEE COMMANDEE PAR REGULATION DE TELECHARGEMENTS LOGICIELS

(30) Priorität: 27.08.2003 DE 10339456
(43) Veröffentlichungstag der Anmeldung: 24.05.2006
(73) Patentinhaber: Nokia Solutions and Networks GmbH & Co. KG, 81541 Munich (DE)
(72) Erfinder: DILLINGER, Markus, 81737 München (DE); NIEDERMEIER, Christoph, 80999 München (DE); SCHMID, Reiner, 80538 München (DE)
(74) Vertreter: Nokia EPO representatives
(86) Internationale Anmeldenummer: PCT/EP2004/051950
(87) Internationale Veröffentlichungsnummer: WO 2005/022942

(56) Entgegenhaltungen:
- US-A- 5 896 566
- US-A- 6 023 620
- US-A1- 2002 138 545
- US-A1- 2003 186 689

## Beschreibung

Die Erfindung betrifft Verfahren zum Übertragen von Software-Modulen zu Teilnehmer-Endgeräten eines Funk-Kommunikationssystems.

Die Entwicklung und der Einsatz eines neuen Übertragungsstandards in mobilen Telekommunikationsnetzwerken erfordern einen hohen Aufwand, um ein reibungsloses Zusammenspiel der einzelnen Komponenten zu erreichen. Dies wird nach heutigem Stand durch aufwändige Standardisierungen, wie beispielsweise für die Mobilfunkstandards GSM (Global System for Mobile Communications) oder UMTS (Universal Mobile Telecommunication System), und umfangreiche Tests der einzelnen Komponenten erzielt, wobei insbesondere die Interaktion zwischen mobilen Endgeräten und Netzwerkelementen im so genannten Funkzugangsnetz, engl. Radio Access Network (RAN), betrachtet wird. Endgeräte nach dem heutigem Stand der Technik sind jedoch hinsichtlich der Nutzung von Radiotechnologien auf eine genau definierte Auswahl von so genannten Funkzugangstechnologien, engl. Radio Access Technologies (RAT), beschränkt, da jede Funktechnologie den Einsatz einer spezifischen Hardware erfordert. Im Gegensatz hierzu können rekonfigurierbare Endgeräte bzw. Terminals, die auch als Software Defined Radio bekannt sind, mittels eines softwareprogrammierbaren Transceivers eine neue, bisher nicht unterstützte Radiotechnologie nutzen, indem der Transceiver mittels Austausch von Software entsprechend konfiguriert wird. Neue Funktechniken und Standards können daher durch einen einfachen Softwaredownload auf das Endgerät nutzbar gemacht werden, d.h. auch bereits einen Funkstandard unterstützende Endgeräte können im laufenden Betrieb derart angepasst werden, dass sie eine neue Funktechnologie nutzen können.

Eine flexible Nutzung rekonfigurierbarer Endgeräte erfordert einen sicheren und zuverlässigen Mechanismus zum Herunterladen der jeweils benötigten Software, das so genannte Software Download, über die Luftschnittstelle auf das Endgerät. Ein derartiger Software-Download-Mechanismus ermöglicht nicht nur das Laden von Software für eine neue, bisher nicht unterstützte Funktechnologie, sondern darüber hinaus auch so genannte Software-Updates und Bug-Fixes sowie das Laden von Applikationssoftware. In der Regel wird das Laden neuer Software, beispielsweise Software zur Unterstützung neuer Funktechnologien bzw. neuer Applikationen, durch den Benutzer bzw. das Endgerät angestoßen. Es gibt jedoch auch Szenarien, in denen der Hersteller der Endgeräte oder ein Softwareanbieter von sich aus einen Software-Download, beispielsweise in Form von subskribierten Software-Updates, dringende Bug-Fixes bzw. Firmware-Updates, initiiert.

Der Benutzer bzw. sein Endgerät kann sich jedoch in einer Situation befinden, in der ein von außen initiierter Software-Download aus Sicht des Benutzers, der gegenwärtig auf dem - Endgerät aktiven Dienste oder der Netzwerkverbindung ungünstig bzw. nicht möglich ist. Beispiele für derartige Situationen sind, dass das Endgerät ausgeschaltet ist, dass die verfügbare Bandbreite der aktuellen Netzanbindung zu gering ist, dass die im Software-Update enthaltenen neuen Features in der derzeitigen Netzwerkumgebung nicht funktionieren, dass der Benutzer im Software-Update enthaltene neue Features derzeit nicht nutzen möchte, dass die angebotene neue Funk-Technologie im aktuell versorgenden Netz bzw. in der aktuellen Situation nicht anwendbar ist, beispielsweise während einer Reise in einem diese Funk-Technologie nicht unterstützenden Land, dass ein Software-Download in der aktuellen Situation sehr kostenintensiv wäre, oder dass die Performance eines für den Benutzer wichtigen Dienstes in unzumutbarer Weise beeinträchtigen würde.

Ein mögliches Verfahren zur Vermeidung unerwünschter, von außen initiierten Software-Downloads besteht darin, vor dem Download eine Verhandlung mit dem Benutzer bzw. seinem - Endgerät hinsichtlich der Notwendigkeit des Downloads durchzuführen. Nachteile dieses Verfahrens bestehen darin, dass dies nur im eingeschalteten Zustand und bei einwandfreier Netzwerkverbindung funktioniert. Falls der Benutzer sich jedoch gerade in einem fremden Netz aufhält, können häufiger stattfindende Verhandlungen zwischen Softwareanbietern und dem Endgerät jedoch nachteilig beträchtliche Kosten verursachen. Zudem ist eine Verschiebung eines Downloads auf einen späteren, günstigeren Zeitpunkt nur dann in einfacher Weise möglich, wenn der Softwareanbieter ein geeignetes Verfahren hierfür bereitstellt.

In heute realisierten Szenarien werden Software-Downloads auf mobile Telekommunikationsendgeräte ausschließlich von den Benutzern initiiert. Üblicherweise wird Software, dabei handelt es sich beispielsweise um Spiele, mittels Hypertext Transport Protocol (HTTP) von einer Web-Seite geladen, wobei die dazu benötigte Information (Uniform Resource Locator, URL) über die Web-Seite entweder mittels eines auf dem Wireless Application Protocol (WAP) basierend Browsers vom Teilnehmer selbst ermittelt wurde, oder diesem von einem Anbieter, beispielsweise im Rahmen einer Subskription eines Info-Kanals zu neuen Spielen, per Short Message Service (SMS) zugeschickt wurde. Andere Inhalte wie Klingeltöne, Bildschirmlogos, Bildschirmschoner oder Bildmitteilungen können ebenfalls über einen derartigen Mechanismus geladen werden. Die HTTP-basierte Datenübertragung kann dabei sowohl leitungsvermittelt als auch paketvermittelt, wie beispielsweise bei GPRS (General Packet Radio Service), erfolgen. Hierbei wird eine Benachrichtigung hinsichtlich der Verfügbarkeit neuer Software per SMS oder mittels eines WAP-Push-Mechanismus an das Endgerät geschickt, wobei diese Benachrichtigung - Informationen über die Software sowie eine URL, über die die Software herunter geladen werden kann, enthält.

Ähnliches gilt auch für den so genannten Multimedia Messaging Service (MMS). Im Gegensatz zu SMS wird jedoch eine MMS nicht per Push-Mechanismus auf das Endgerät übertragen, sondern - lediglich eine so genannte MMS-Indication, die unter anderem eine URL enthält, an das Endgerät geschickt. Wiederum entscheidet der Benutzer darüber, ob er die MMS auf sein Endgerät laden möchte oder nicht. Falls eine MMS nicht innerhalb einer gewissen Zeit vom Teilnehmer abgeholt wird, wird sie vom Multimedia Messaging Services Center (MMSC) entweder gelöscht oder auf einen Dauerspeicher (Permanent Store) verlagert und für eine längere Zeitspanne gespeichert. Der Benutzer besitzt in diesem Fall somit die Möglichkeit, durch Nicht-Abholen einer MMS die Annahme zu verweigern oder zumindest den Downloads auf einen für ihn günstigen Zeitpunkt zu verschieben.

*Weiterer Stand der Technik kann der Druckschrift* US 6 023 620 A *entnommen werden, die ein Verfahren zur Steuerung eines Downloads von Software zu einem Mobiltelefon offenbart. Das Verfahren umfasst die Schritte Übertragen einer ersten SMS-Nachricht an das Mobiltelefon, wobei die Nachricht einen Befehl für das Mobiltelefon enthält, sich auf einen Empfang von Software vorzubereiten, Übertragen einer zweiten SMS-Nachricht durch das Mobiltelefon, wobei die Nachricht eine Bestätigung in Reaktion auf die erste Meldung enthält, Übertragen der Software an das Mobiltelefon, Empfangen der Software durch das Mobiltelefon, und Laden der übertragenen Software in einen inaktiven Speicher des Mobiltelefons.*

*Weiterer Stand der Technik kann der Druckschrift* US 5 896 566 A *entnommen werden, die ein Verfahren zum Hinweisen von Mobilgeräten auf eine Verfügbarkeit von aktualisierter Software offenbart*

Der Erfindung liegt die Aufgabe zugrunde, ein Verfahren sowie Einrichtungen eines Funk-Kommunikationssystems anzugeben, die eine flexible Steuerung von Software-Download auf Teilnehmer -Endgeräte ermöglichen. Diese Aufgabe wird erfindungsgemäß durch die Merkmale der unabhängigen Patentansprüche gelöst.

Jeweils abhängige Patentansprüche betreffen vorteilhafte Ausgestaltungen der Erfindung.

Die Erfindung ermöglicht vorteilhaft eine regelgesteuerte verzögerte Ausführung von einleitend beschriebenen Software-Downloads auf ein Teilnehmer-Endgerät. Dabei ist nach einer Ausgestaltung eine dem Teilnehmer bzw. dem Teilnehmer-Endgerät zugeordnete Einrichtung im Sinne einer Software Download Box mit einer einem Anrufbeantworter vergleichbaren Funktionalität in dem Funk-Kommunikationssystem verwirklicht. Diese Einrichtung wird von einem Softwareanbieter anstelle des Teilnehmer-Endgerätes adressiert. Abhängig von durch den Teilnehmer und/oder das Teilnehmer-Endgerät veränderbaren Regeln in der Einrichtung wird ein Software-Modul entweder unmittelbar oder erst zu einem späteren Zeitpunkt zu dem Teilnehmer-Endgerät übertragen. Bei einer Übertragung zu einem späteren Zeitpunkt wird das Software-Modul nach einer weiteren Ausgestaltung zunächst in einer Speichereinrichtung zwischengespeichert.

Vorteilhaft kann durch die erfindungsgemäßen Merkmale die Übertragung von Software-Modulen zu dem Teilnehmer-Endgerät derart gesteuert werden, dass ein möglichst optimales Verhältnis von Preis und Verfügbarkeit von Software für den Teilnehmer erzielt wird. Dies kann beispielsweise in der Weise erfolgen, dass ein Software-Download auf das - Teilnehmer-Endgerät vorwiegend dann vorgenommen werden, wenn die Verbindungskosten besonders gering sind.

Die Erfindung wird nachfolgend an Hand von in der Zeichnung dargestellten Ausführungsbeispielen näher erläutert. Dabei zeigen
FIG 1 eine Darstellung zur Erläuterung des erfindungsgemäßen Betriebs einer Software-Download-Box durch den Netzbetreiber, und
FIG 2 eine Darstellung zur Erläuterung des erfindungsgemäßen Betriebs einer Software-Download-Box durch den Endgeräte-Hersteller.

Ein wesentlicher Teil der Erfindung besteht in der Einführung einer Einrichtung, im folgenden als Software Download Box bezeichnet, die in Stellvertretung für ein rekonfigurierbares Endgerät als Adressat für vom Endgerätehersteller oder Dienstanbieter initiierte Software-Upgrades fungiert. Ihre Funktion ist dabei prinzipiell vergleichbar mit der einer Voice Box, wie sie heute von Mobilfunkbetreibern angeboten wird. Im Gegensatz zu einer Voice Box ist die Software Download Box allerdings wesentlich flexibler konfigurierbar. Dies geschieht über so genannte Policies, die allgemein durch Sätze von Regeln formuliert werden, die der Benutzer über sein mobiles Endgerät generieren, modifizieren und löschen kann. Diese Policies steuern das Verhalten der Software Download Box dahingehend, einen vom Endgerätehersteller oder Serviceanbieter initiierten Software Upgrade entweder sofort zurückzuweisen, weil er als unerwünscht oder irrelevant klassifiziert wurde, oder aber zu akzeptieren und dann entweder sofort an das Endgerät weiterzuleiten, oder aber für einen späteren Abgleich mit dem Endgerät zwischenzuspeichern.

Der diesem Verhalten zugrunde liegende Entscheidungsmechanismus bezieht neben statischer Information auch die derzeitige Situation, in der sich das Endgerät bzw. der Benutzer befinden, mit ein. Zum Beispiel kann ein Aufenthalt außerhalb des Heimat-Netzwerkes (Home Network), also im Falle von Roaming in einem anderen Mobilfunknetzwerk bzw. in einem anderen Land, dazu führen, dass in anbetracht der in diesen Fällen für den Benutzer entstehenden Kosten nur ganz bestimmte Downloads an das Endgerät weitergeleitet werden, während alle als weniger wichtig klassifizierten Downloads erst bei Rückkehr des Endgeräts in das Heimat-Netzwerk nachträglich durchgeführt werden.

Ein wichtiger Aspekt der vorliegenden Erfindung besteht zudem in der effizienten Zwischenspeicherung von Software in der Software Download Box für den Fall, dass ein Download auf einen späteren, günstigeren Zeitpunkt verschoben werden soll. Um die Speicherung effizient zu gestalten, wird der Mechanismus zur Zwischenspeicherung so gestaltet, dass eine mehrfache Speicherung des gleichen Software-Moduls für verschiedene Benutzer nach Möglichkeit vermieden wird. Dies kann beispielsweise erreicht werden, indem nur die Software-Upgrade-Benachrichtigung in der Software Download Box gespeichert wird, während die jeweiligen Software-Module entweder vom Software-Lieferanten, also dem Endgeräte-Hersteller oder einem Dienstanbieter, für einen späteren Download vorgehalten wird oder aber vom Betreiber des Mobilfunknetzwerkes in einer Speichereinrichtung, im folgenden als Software Repository bezeichnet, das von einem Software Download Server des Betreibers verwaltet wird, zwischengespeichert wird. Bei einem späteren Abgleich von Software Upgrades mit dem Endgerät weist die Software Download Box den Software Download Server an, den Upgrade durchzuführen.

Neben der Unterstützung von Software Download Prozessen sind diverse weitere Nutzungen der Software Download Box vorstellbar. Eine interessante Anwendung besteht im Zwischenspeichern abonnierter Broadcast-Services wie beispielsweise Previews musikalischer Neuerscheinungen, neuer Video- oder Kino-Filme, oder neuer Computer-Spiele, oder aber im Zwischenspeichern von Instant Messages mit Attachments, deren Übertragung viel Bandbreite benötigt. Eine derartige Zwischenspeicherung findet in ähnlicher Weise bereits für den einleitend beschriebenen MMS statt, jedoch hat der Teilnehmer in diesem Fall - keinerlei Möglichkeit, bestimmte Nachrichten automatisch entweder sofort zu löschen oder sofort an das Endgerät weiterzuleiten. Die Nutzung der Software Download Box für diesen Zweck ermöglicht einen flexibel konfigurierbaren und für bestimmte Situationen spezifischen Umgang mit den genannten Daten.

Die flexible Konfigurierbarkeit wird erreicht durch Verwendung von so genannten Policies, die aus Sätzen von Regeln bestehen. Der Teilnehmer kann Policies entweder über sein rekonfigurierbares Endgerät oder über einen Web-basierten Mechanismus generieren, modifizieren und löschen. Policies gelten jeweils für bestimmte Nutzungsarten. Eine Policy kann charakterisiert sein durch die Rolle des Benutzers, z.B. geschäftliche oder private Nutzung, sowie durch den Aufenthaltsort, also im Mobilfunknetz des eigenen Betreibers, im Netz eines anderen inländischen Betreibers oder im Netz eines ausländischen Betreibers, und durch die gegenwärtige Situation des Benutzers, also beispielsweise. unterwegs, in einer Besprechung oder schlafend. Allgemein gesprochen wird eine jeweilige Policy für einen bestimmten Kontext definiert. Innerhalb einer Policy gibt es für verschiedene Arten von Daten, wie beispielsweise ein Software Upgrade, ein wichtiger Bug Fix oder eine wichtige Instant Message, jeweils Regeln, die festlegen, wie mit den Daten in dem mit der Policy assoziierten Kontext zu verfahren ist. Um die Anzahl der zu definierenden Policies und Regeln klein zu halten, sind auch generische Kontexte und Regeln, z.B. der Kontext auf "Reisen in beliebiger Rolle" oder eine Regel, die für "alle Datenübertragungen, deren Datenmenge ein gegebenes Limit überschreitet", gilt sowie ausschließende Kontexte und Regeln, z.B. der Kontext "nicht schlafend" oder eine Regel, die für "alle Daten außer wichtige Bug-Fixes" gilt, spezifizierbar.

Die verschiedenen Policies können optional zudem priorisiert bzw. in eine Reihenfolge gebracht werden, um Konflikte zwischen einander widersprechenden Policies auflösen zu können.

Zu den möglichen Aktionen, die bei Zutreffen einer bestimmten Policy-Regel ausgelöst werden, können optional neben den bereits erwähnten Basisaktionen "Zurückweisung der Daten", "Zwischenspeichern der Daten" und "Weiterleiten der Daten ans Endgerät" auch Aktionen wie "automatischer Upgrade weiterer Software-Packete durch die Software-Download-Box" gehören.

Neben Policies, die die Behandlung eintreffender Daten durch die Software Download Box beschreiben, gibt es auch solche, die den Abgleich von zunächst in der Box bzw. dem Software Repository des die Box betreibenden Software Download Servers zwischengespeicherten Modulen bzw. Daten mit dem Endgerät regeln. Diese Policies werden bei jeder Änderung der Situation des Benutzers bzw. des Endgerät-Kontextes überprüft. Hierzu werden Kontext-Informationen regelmäßig vom Endgerät zur - Software Download Box übertragen. Neben dem Benutzer-Kontext können dabei zum Beispiel auch aktuelle Monitorergebnisse von Radio-Standards kommuniziert werden, um die Software Download Box in die Lage zu versetzen, zu beurteilen, ob ein Software-Upgrade für eine bestimmte Funk-Technologie gegenwärtig lohnend bzw. erforderlich ist. Dies wird im allgemeinen nur dann der Fall sein, wenn die jeweilige Funk-Technologie im aktuellen Netzwerk zur Verfügung steht und damit die Benutzung des Funkstandards in näherer Zukunft in Frage kommt. Wird bei dieser Überprüfung festgestellt, dass eine geeignete Situation für eine Synchronisation bestimmter Daten zwischen der Software Download Box und dem Endgerät vorliegt, kann der Benutzer entweder interaktiv auswählen, welche Downloads tatsächlich vorgenommen werden, oder aber der komplette Synchronisationsprozess läuft automatisch ab. Ob und in welchem Maße der Synchronisationsprozess interaktiv abläuft, ist ebenfalls im Rahmen der jeweiligen Policies festgelegt.

Geeignete Bedingungen für einen Download sind beispielsweise, dass die Kosten für Download unterhalb eines vorgegebenen Limits liegen, dass die Verbindung eine genügend hohe Bandbreite aufweist (z.B. in einem Hot Spot oder im Rahmen einer Festnetz-Anbindung), oder dass derzeit keine Dienste aktiv sind, die durch den Download gestört werden könnten. Allgemein sollte der Abgleich zu einem möglichst frühen geeigneten Zeitpunkt erfolgen, also etwa unmittelbar nach dem ersten Anschalten des Endgeräts im Heimat-Netzwerk, um Fehler bzw. Kosten infolge verspäteter Einspielung z.B. von Bug-Fixes zu vermeiden. Ein Abgleich mit in der Software Download Box gespeicherten Inhalten kann auch aktiv durch das Endgerät bzw. den Teilnehmer selbst initiiert werden, wenn das Endgerät bzw. der Teilnehmer die gegenwärtige Situation als geeignet ansieht.

Im folgenden werden zwei mögliche Ausführungsbeispiele der Erfindung beschrieben:

### 1. Software Download Box betrieben vom Home Network Operator

Dieses Ausführungsbeispiel bzw. Szenario basiert auf der Annahme, dass die Netzbetreiber ihre Netzwerkinfrastruktur um Elemente angereichert haben, die den Software Download unterstützen.

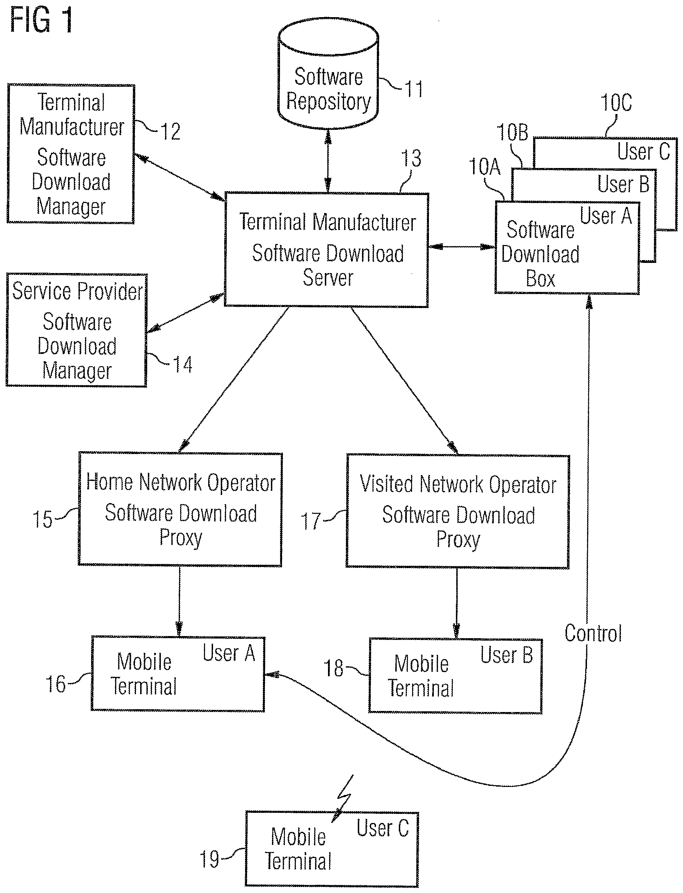

FIG 1 zeigt eine mögliche Architektur für dieses Szenario, wobei im Zentrum dieser Architektur ein Software Download Server 13 steht, der mittels eines Software Repository 11 Software-Pakete und andere Daten zwischenspeichern kann. Für jeden Benutzer User A, User B, User C wird vom Netzwerkoperator eine Software Download Box 10A, 10B, 10C betrieben, die zur Umsetzung der oben beschriebenen Funktionalität mit dem Software Download Server 13 interagiert. Über ihre Endgeräte 16, 18 und 19 können die Benutzer User A, User B, User C die Funktion ihrer jeweiligen Software Download Box 10A, 10B, 10C kontrollieren, wenn sie Verbindung zum Netz haben. Dies ist in Figur 1 für die Benutzer User A und User B der Fall, wobei die Verbindung Control zur Software Download Box aus Übersichtlichkeits-gründen hier nur für User A gezeigt ist. Der Benutzer User C hingegen hat derzeit keine Netzverbindung; seine Software Download Box agiert für ihn autonom gemäß der von User C konfigurierten Policies.

FIG 1 zeigt, dass Software Upgrades von Endgeräte-Herstellern 12 bzw. Service Providern 14 initiiert werden, und über den Software Download Server 13 des Home Network Operators abgewickelt werden. Dieser Server 13 stellt durch Interaktion mit der Software Download Box 10A, 10B, 10C der vom jeweiligen Software Upgrade betroffenen Benutzer fest, welche Aktionen umgesetzt werden sollen. Downloads können sowohl für Endgeräte, die im eigenen Netzwerk des Operators eingebucht sind, z. B. das Endgerät 16 des Benutzers User A, als auch für solche, die in einem Netzwerk eines anderen Operators eingebucht sind, z. B. das Endgerät 18 des Benutzers User B, durchgeführt werden, falls die definierten Policies des jeweiligen Benutzers dies gestatten. Für Endgeräte, die derzeit nicht mit einem Netzwerk verbunden bzw. ausgeschaltet sind, wie z. B. das Endgerät 19, wird ein Abgleich mit der Software Download Box 10C durchgeführt, sobald wieder eine geeignete Netzverbindung besteht.

Der Vorteil dieses Szenarios besteht darin, dass die jeweilige Software Download Box 10A, 10B, 10C eng in das Netzwerk des Mobilfunkbetreibers integriert ist und damit von diesem mit Informationen über den Status des Endgeräte versorgt werden kann.

### 2. Software Download Box betrieben vom Endgeräte-Hersteller

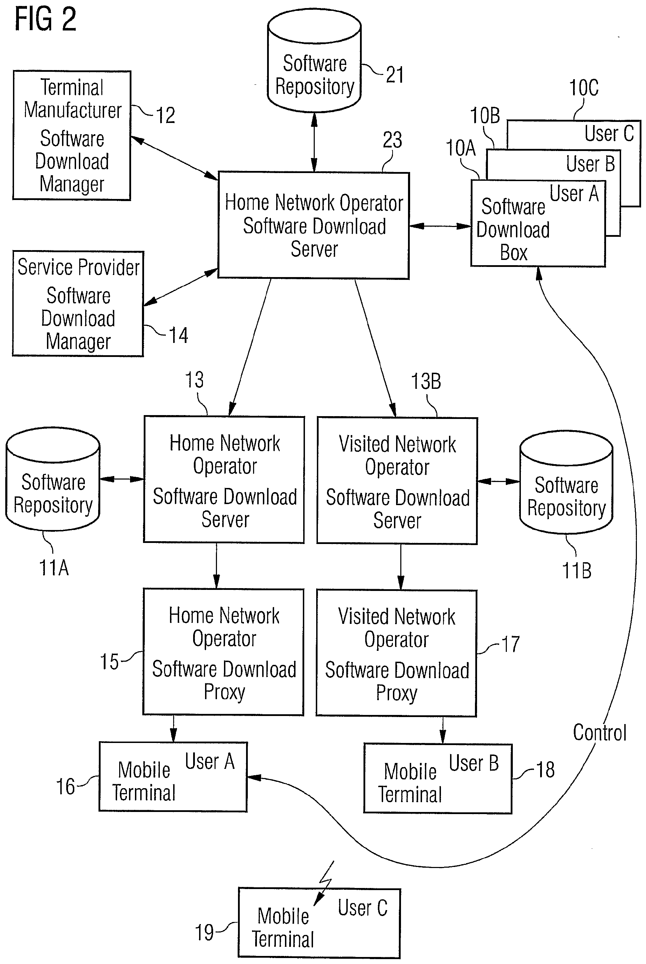

In diesem zweiten Ausführungsbeispiel bzw. Szenario wird wie im obigen Szenario angenommen, dass die Netzbetreiber ihre Netzwerkinfrastruktur um Elemente angereichert haben, die den Software Download unterstützen. Allerdings wird die Software Download Box 10A, 10B, 10C eines Benutzers User A, User B, User C nicht vom Netzwerkbetreiber, sondern vom jeweiligen Endgeräte-Hersteller über einen eigenen Software Download Server 23 betrieben, der auf ein eigenes Software Repository 21 zugreift. Ansonsten entspricht die Funktionalität der einzelnen Elemente der in Figur 2 dargestellten Architektur im wesentlichen der Beschreibung zur Architektur von Figur 1. Allerdings ist der jeweilige Benutzer hier nicht an einen bestimmten Netzbetreiber gebunden.

Dieses Szenario hat den Vorteil, dass die Endgeräte-Hersteller, die in der Regel die kritischen Software-Upgrades initiieren, für den Betrieb der Software Download Box 10A, 10B, 10C eines Benutzers verantwortlich sind und für diesen speziellen Fall der Transfer von Software in das Software Repository 11A, 11B optimiert werden kann.

Die Hauptvorteile der im vorigen Abschnitt beschriebenen Erfindung bestehen in den folgenden Punkten:
1) Durch Einsatz einer Software Download Box kann der Teilnehmer eine deutliche Kostenersparnis erzielen, da Software Downloads auf das Endgerät immer dann vorgenommen werden, wenn die Verbindung dafür besonders günstig ist. Teure Downloads werden von der Software Download Box auf einen späteren Zeitpunkt verschoben, Downloads unnötiger Software gänzlich vermieden. Dies schlägt insbesondere bei Auslandsaufenthalten zu Buche, wo die Gebühren im fremden Netz in jedem Fall vom Teilnehmer getragen werden müssen.
2) Mit Hilfe der Software Download Box kann vermieden werden, dass wichtige Software-Downloads versäumt werden. Ist das Endgerät längere Zeit nicht erreichbar oder gar ausgeschaltet, besteht das Risiko, dass wichtige Bug-Fixes von Seiten des Endgeräte-Herstellers versäumt werden. Die - Software Download Box kann die Software bzw. die Update-Nachricht zwischenspeichern und zu einem geeigneten Zeitpunkt automatisch in Gang setzen, ohne dass der Teilnehmer selbst aktiv werden muss.
3) Durch Verwendung einer Software Download Box kann die Beeinträchtigung aktiver Dienste durch Downloads reduziert oder ganz vermieden werden. Mit Hilfe eines geeigneten Satzes von Regeln zusammen mit Information über die aktuell auf dem Endgerät aktiven Dienste können Software Downloads unter Berücksichtigung ihres Datenaufkommens sowie ihrer Wichtigkeit entweder wie geplant durchgeführt oder aber auf einen späteren Zeitpunkt verschoben werden, wenn die Beeinträchtigung der aktiven Dienste als gravierender einzustufen ist als die Aussetzung des Software Downloads.
4) Die Software Download Box kann den Download wichtiger Software oder Information priorisieren, während weniger wichtige Software zu einem späteren Zeitpunkt bzw. überhaupt nicht herunter geladen wird. Dabei werden teilnehmerspezifische Kriterien und Regeln angewandt, die unter anderem auch dem derzeitigen Aufenthaltsort sowie die Situation, in der sich der Teilnehmer derzeit befindet, Rechnung tragen können.
5) Die Software Download Box kann für die Synchronisation mit dem Endgerät die jeweils für bestimmte Downloads am besten geeignete Verbindung auswählen und so für ein optimales Verhältnis von Preis und Verfügbarkeit von Software sorgen. Auch hierfür können, wie oben erläutert, teilnehmerspezifische Kriterien und Regeln berücksichtigt werden.

## Patentansprüche

1. Verfahren zum Übertragen zumindest eines Software-Moduls zu einem Teilnehmer-Endgerät (16, 18, 19) eines Funk-Kommunikationssystems, bei dem die Übertragung des zumindest einen Software-Moduls zu dem Teilnehmer-Endgerät (16, 18, 19) derart zeitlich gesteuert wird, dass das zumindest eine Software-Modul abhängig von zumindest einer von einem Teilnehmer (User A, User B, User C) und/oder dem Teilnehmer-Endgerät (16, 18, 19) veränderbaren gespeicherten Regel unmittelbar oder zu einem späteren Zeitpunkt zu dem Teilnehmer-Endgerät (16, 18, 19) übertragen wird.

2. Verfahren nach Anspruch 1, bei dem zumindest Teile des Teilnehmer-Endgerätes (16, 18, 19) mittels des Software-Moduls rekonfigurierbar sind.

3. Verfahren nach Anspruch 1 oder 2, bei dem die von dem Teilnehmer (User A, User B, User C) und/oder dem Teilnehmer-Endgerät (16, 18, 19) veränderbare zumindest eine Regel Präferenzen des Teilnehmers (User A, User B, User C) und/oder Fähigkeiten des Teilnehmer-Endgerätes (16, 18, 19) angibt.

4. Verfahren nach einem der Ansprüche 1 bis 3, bei dem das zumindest eine Software-Modul vor der Übertragung zu dem Teilnehmer-Endgerät (16, 18, 19) in einer Einrichtung (10A, 10B, 10C) gespeichert wird, wobei das zumindest eine Software-Modul von einem Software-Modul-Anbieter (12, 14) zu der Einrichtung (10A, 10B, 10C) übertragen wird.

5. Verfahren nach einem der Ansprüche 1 bis 3, bei dem ein Hinweis auf das Vorliegen des zumindest einen Software-Moduls vor der Übertragung des Software Moduls zu dem Teilnehmer-Endgerät (16, 18, 19) in einer Einrichtung (10A, 10B, 10C) gespeichert wird, wobei der Hinweis auf das zumindest eine Software-Modul von einem Software-Modul-Anbieter (12, 14) zu der Einrichtung (10A, 10B, 10C) übertragen wird.

6. Verfahren nach Anspruch 4 oder 5, wobei die Einrichtung (10A, 10B, 10C) innerhalb des das Teilnehmer-Endgerät (16, 18, 19) versorgenden Funk-Kommunikationssystems, in dem Bereich eines Herstellers des Teilnehmer-Endgerätes (16, 18, 19) oder in dem Bereich eines Diensteanbieters angeordnet ist.

7. Verfahren nach Anspruch 6, wobei die Einrichtung (10A, 10B, 10C) anstelle des Teilnehmer-Endgerätes (16, 18, 19) von dem Hersteller des Teilnehmer-Endgerätes (16, 18, 19) und/oder dem Diensteanbieter für die Übertragung des Software-Moduls oder des Hinweises auf das das Software-Modul adressiert wird.

8. Verfahren nach einem der Ansprüche 4 bis 7, bei dem die von dem Teilnehmer (User A, User B, User C) und/oder dem Teilnehmer-Endgerät (16, 18, 19) definierte Regel die Einrichtung (10A, 10B, 10C) derart steuert, dass die Übertragung des Software-Moduls zurückgewiesen oder akzeptiert wird, wobei bei einem Akzeptieren des Software-Moduls unmittelbar oder zu einem späteren Zeitpunkt die Übertragung des Software-Moduls zu dem Teilnehmer-Endgerät (10A, 10B ,10C) durchgeführt wird.

9. Verfahren nach Anspruch 8, bei dem bei der Zurückweisung der Übertragung des Software-Moduls durch die definierte Regel lediglich ein Hinweis auf das Vorliegen des Software-Moduls in der Einrichtung (10A, 10B, 10C) gespeichert wird, und das Software-Modul in einer Speichereinrichtung für Software-Module (11, 21) des Funk-Kommunikationssystems gespeichert wird.

10. Verfahren nach Anspruch 9, bei dem die Speicherung des zurückgewiesenen Software-Moduls in der Speichereinrichtung (11, 21) von einer der Speichereinrichtung (11, 21) und der Einrichtung (10A, 10B, 10C) zugeordneten zentralen Servereinrichtung (13, 23) des Funk-Kommunikationssystems gesteuert wird, wobei von der Einrichtung (10A, 10B, 10C) die Übertragung des gespeicherten Software-Moduls zu einem späteren Zeitpunkt zu dem Teilnehmer-Endgerät (16, 18, 19) von der zentralen Servereinrichtung (13, 23) angefordert wird.

11. Verfahren nach einem vorhergehenden Anspruch, bei dem von der Einrichtung (10A, 10B, 10C) in Abhängigkeit von der zumindest einen definierten Regel weitere Software-Module angefordert werden.

12. Verfahren nach einem vorhergehenden Anspruch, bei dem mittels der zumindest einen Regel Grenzwerte für Kosten der Übertragung des Software-Moduls, eine Übertragungskapazität und/oder einen Zeitpunkt der Übertragung definiert werden.

13. Einrichtung (10A, 10B, 10C) eines Funk-Kommunikationssystems, mit Mitteln zum Speichern zumindest einer von einem Teilnehmer (User A, User B, User C) und/oder einem zugeordneten Teilnehmer-Endgerät (10A, 10B, 10C) definierten veränderbaren Regel, und zum zeitlichen Steuern einer Übertragung zumindest eines Software-Moduls zu dem Teilnehmer-Endgerät (10A, 10B, 10C) in Abhängigkeit von der gespeicherten zumindest einen Regel unmittelbar oder zu einem späteren Zeitpunkt.

14. Einrichtung (10A, 10B, 10C) nach Anspruch 13, mit Mitteln zum Empfangen des zumindest einen Software-Moduls oder eines Hinweises auf das Vorliegen des zumindest einen Software-Moduls von einem Software-Modul-Anbieter (12, 24).

15. Einrichtung (10A, 10B, 10C) nach Anspruch 13 oder 14, die über eine zentrale Servereinrichtung (13, 23) mit einer Speichereinrichtung (11, 21) zum Speichern des zumindest einen Software-Moduls verbunden ist.

16. Funk-Kommunikationssystem, mit zumindest einer einem Teilnehmer-Endgerät (16, 18, 19) zugeordneten Einrichtung (10A, 10B, 10C) zum Speichern zumindest einer von einem Teilnehmer (User A, User B, User C) und/oder einem zugeordneten Teilnehmer-Endgerät (10A, 10B, 10C) definierten veränderbaren Regel, und zum zeitlichen Steuern einer Übertragung zumindest eines von einem Software-Modul-Anbieter (12, 24) empfangenen Software-Moduls zu dem Teilnehmer-Endgerät (10A, 10B, 10C) in Abhängigkeit von der gespeicherten zumindest einen Regel unmittelbar oder zu einem späteren Zeitpunkt, einer Speichereinrichtung (11, 21) zum Speichern des empfangenen zumindest einen Software-Moduls, und einer Servereinrichtung (13, 23) zum Steuern der Speicherung des empfangenen zumindest einen Software-Moduls in der Speichereinrichtung (11, 21) und zum Übertragen des gespeicherten Software-Moduls zu der Einrichtung (10A, 10B, 10C) für die Übertragung zu dem Teilnehmer-Endgerät (10A, 10B, 10C).

## Claims

1. Method for transmitting at least one software module to a subscriber terminal (16, 18, 19) in a radio communication system, in which the transmission of the at least one software module to the subscriber terminal (16, 18, 19) is temporally controlled in such a manner that the at least one software module is transmitted to the subscriber terminal (16, 18, 19) immediately or at a later time on the basis of at least one stored rule which can be changed by a subscriber (User A, User B, User C) and/or the subscriber terminal (16, 18, 19).

2. Method according to Claim 1, in which at least parts of the subscriber terminal (16, 18, 19) can be reconfigured by means of the software module.

3. Method according to Claim 1 or 2, in which the at least one rule which can be changed by the subscriber (User A, User B, User C) and/or the subscriber terminal (16, 18, 19) indicates preferences of the subscriber (User A, User B, User C) and/or capabilities of the subscriber terminal (16, 18, 19).

4. Method according to one of Claims 1 to 3, in which the at least one software module is stored in a device (10A, 10B, 10C) before being transmitted to the subscriber terminal (16, 18, 19), wherein the at least one software module is transmitted from a software module provider (12, 14) to the device (10A, 10B, 10C).

5. Method according to one of Claims 1 to 3, in which an indication of the presence of the at least one software module is stored in a device (10A, 10B, 10C) before the software module is transmitted to the subscriber terminal (16, 18, 19), wherein the indication of the at least one software module is transmitted from a software module provider (12, 14) to the device (10A, 10B, 10C).

6. Method according to Claim 4 or 5, wherein the device (10A, 10B, 10C) is arranged inside the radio communication system supplying the subscriber terminal (16, 18, 19) in the region of a manufacturer of the subscriber terminal (16, 18, 19) or in the region of a service provider.

7. Method according to Claim 6, wherein the device (10A, 10B, 10C) is addressed, instead of the subscriber terminal (16, 18, 19), by the manufacturer of the subscriber terminal (16, 18, 19) and/or the service provider for transmitting the software module or the indication of the software module.

8. Method according to one of Claims 4 to 7, in which the rule defined by the subscriber (User A, User B, User C) and/or the subscriber terminal (16, 18, 19) controls the device (10A, 10B, 10C) in such a manner that the transmission of the software module is rejected or accepted, wherein the software module is transmitted to the subscriber terminal (10A, 10B, 10C) immediately or at a later time if the software module is accepted.

9. Method according to Claim 8, in which, if the transmission of the software module is rejected by the defined rule, only an indication of the presence of the software module is stored in the device (10A, 10B, 10C) and the software module is stored in a storage device for software modules (11, 21) in the radio communication system.

10. Method according to Claim 9, in which the storage of the rejected software module in the storage device (11, 21) is controlled by a central server device (13, 23) assigned to the storage device (11, 21) and to the device (10A, 10B, 10C) in the radio communication system, wherein the transmission of the stored software module to the subscriber terminal (16, 18, 19) at a later time is requested from the central server device (13, 23) by the device (10A, 10B, 10C).

11. Method according to a preceding claim, in which further software modules are requested by the device (10A, 10B, 10C) on the basis of the at least one defined rule.

12. Method according to a preceding claim, in which limit values for costs of transmitting the software module, a transmission capacity and/or a transmission time is/are defined by means of the at least one rule.

13. Device (10A, 10B, 10C) in a radio communication system, having means for storing at least one changeable rule which is defined by a subscriber (User A, User B, User C) and/or an assigned subscriber terminal (10A, 10B, 10C) and for temporally controlling transmission of at least one software module to the subscriber terminal (10A, 10B, 10C) immediately or at a later time on the basis of the stored at least one rule.

14. Device (10A, 10B, 10C) according to Claim 13, having means for receiving the at least one software module or an indication of the presence of the at least one software module from a software module provider (12, 24).

15. Device (10A, 10B, 10C) according to Claim 13 or 14, which is connected to a storage device (11, 21) for storing the at least one software module via a central server device (13, 23).

16. Radio communication system having at least one device (10A, 10B, 10C) which is assigned to a subscriber terminal (16, 18, 19) and is intended to store at least one changeable rule which is defined by a subscriber (User A, User B, User C) and/or an assigned subscriber terminal (10A, 10B, 10C) and is intended to temporally control transmission of at least one software module received from a software module provider (12, 24) to the subscriber terminal (10A, 10B, 10C) immediately or at a later time on the basis of the stored at least one rule, a storage device (11, 21) for storing the received at least one software module, and a server device (13, 23) for controlling the storage of the received at least one software module in the storage device (11, 21) and for transmitting the stored software module to the device (10A, 10B, 10C) for transmission to the subscriber terminal (10A, 10B, 10C).

## Revendications

1. Procédé de transmission d'au moins un module logiciel à un terminal d'abonné (16, 18, 19) d'un système de radiocommunication, selon lequel la transmission de l'au moins un module logiciel au terminal d'abonné (16, 18, 19) est commandée dans le temps de telle sorte que l'au moins un module logiciel est transmis immédiatement ou à un moment ultérieur au terminal d'abonné (16, 18, 19) en fonction d'au moins une règle mémorisée modifiable par un abonné (User A, User B, User C) et/ou par le terminal d'abonné (16, 18, 19).

2. Procédé selon la revendication 1, selon lequel au moins des parties du terminal d'abonné (16, 18, 19) peuvent être reconfigurées au moyen du module logiciel.

3. Procédé selon la revendication 1 ou 2, selon lequel l'au moins une règle modifiable par l'abonné (User A, User B, User C) et/ou par le terminal d'abonné (16, 18, 19) indique des préférences de l'abonné (User A, User B, User C) et/ou des capacités du terminal d'abonné (16, 18, 19).

4. Procédé selon l'une des revendications 1 à 3, selon lequel l'au moins un module logiciel est mémorisé dans un dispositif (10A, 10B, 10C) avant la transmission au terminal d'abonné (16, 18, 19), l'au moins un module logiciel étant transmis au dispositif (10A, 10B, 10C) par un fournisseur de module logiciel (12, 14).

5. Procédé selon l'une des revendications 1 à 3, selon lequel une notification à propos de la présence de l'au moins un module logiciel est mémorisée dans un dispositif (10A, 10B, 10C) avant la transmission du module logiciel au terminal d'abonné (16, 18, 19), la notification à propos de l'au moins un module logiciel étant transmise au dispositif (10A, 10B, 10C) par un fournisseur de module logiciel (12, 14).

6. Procédé selon la revendication 4 ou 5, le dispositif (10A, 10B, 10C) étant disposé à l'intérieur du système de radiocommunication qui alimente le terminal d'abonné (16, 18, 19), dans la zone d'un fabricant du terminal d'abonné (16, 18, 19) ou dans la zone d'un fournisseur de services.

7. Procédé selon la revendication 6, l'adressage pour la transmission du module logiciel ou la notification à propos du module logiciel étant effectué par le fabricant du terminal d'abonné (16, 18, 19) et/ou par le fournisseur de services vers le dispositif (10A, 10B, 10C) au lieu du terminal d'abonné (16, 18, 19).

8. Procédé selon l'une des revendications 4 à 7, la règle définie par l'abonné (User A, User B, User C) et/ou par le terminal d'abonné (16, 18, 19) commandant le dispositif (10A, 10B, 10C) de telle sorte que la transmission du module logiciel est refusée ou acceptée, en cas d'acceptation du module logiciel, la transmission du module logiciel au terminal d'abonné (10A, 10B, 10C) étant effectuée immédiatement ou à un moment ultérieur.

9. Procédé selon la revendication 8, selon lequel, en cas de refus de la transmission du module logiciel par la règle définie, seule une notification à propos de la présence du module logiciel est mémorisée dans le dispositif (10A, 10B, 10C) et le module logiciel est mémorisé dans un dispositif de mémorisation pour modules logiciels (11, 21) du système de radiocommunication.

10. Procédé selon la revendication 9, selon lequel la mémorisation du module logiciel refusé dans le dispositif de mémorisation (11, 21) est commandée par un dispositif serveur central (13, 23) du système de radiocommunication associé dispositif de mémorisation (11, 21) et au dispositif (10A, 10B, 10C), la transmission du module logiciel mémorisé depuis le dispositif serveur central (13, 23) au terminal d'abonné (16, 18, 19) étant demandée par le dispositif (10A, 10B, 10C) à un moment ultérieur.

11. Procédé selon une revendication précédente, selon lequel des modules logiciels supplémentaires sont demandés par le dispositif (10A, 10B, 10C) en fonction de l'au moins une règle définie.

12. Procédé selon une revendication précédente, selon lequel des valeurs limites pour le coût de la transmission du module logiciel, une capacité de transmission et/ou un moment de la transmission sont définies au moyen de l'au moins une règle.

13. Dispositif (10A, 10B, 10C) d'un système de radiocommunication, comprenant des moyens pour mémoriser au moins une règle modifiable définie par un abonné (User A, User B, User C) et/ou par un terminal d'abonné (10A, 10B, 10C) associé, et pour commander dans le temps une transmission d'au moins un module logiciel au terminal d'abonné (10A, 10B, 10C) immédiatement ou à moment ultérieur en fonction de l'au moins une règle mémorisée.

14. Dispositif (10A, 10B, 10C) selon la revendication 13, comprenant des moyens pour recevoir l'au moins un module logiciel ou d'une notification à propos de la présence de l'au moins un module logiciel de la part d'un fournisseur de module logiciel (12, 24).

15. Dispositif (10A, 10B, 10C) selon la revendication 13 ou 14, lequel est relié par le biais d'un dispositif serveur central (13, 23) à un dispositif de mémorisation (11, 21) servant à mémoriser l'au moins un module logiciel.

16. Système de radiocommunication, comprenant au moins un dispositif (10A, 10B, 10C) associé à un terminal d'abonné (16, 18, 19) destiné à mémoriser au moins une règle modifiable définie par un abonné (User A, User B, User C) et/ou un terminal d'abonné (10A, 10B, 10C) associé et pour commander dans le temps une transmission d'au moins un module logiciel au terminal d'abonné (10A, 10B, 10C) reçu de la part d'un fournisseur de module logiciel (12, 24) immédiatement ou à moment ultérieur en fonction de l'au moins une règle mémorisée, un dispositif de mémorisation (11, 21) destiné à mémoriser l'au moins un module logiciel reçu et un dispositif serveur (13, 23) destiné à commander la mémorisation de l'au moins un module logiciel reçu dans le dispositif de mémorisation (11, 21) et à transmettre le module logiciel mémorisé au dispositif (10A, 10B, 10C) en vue de la transmission au terminal d'abonné (10A, 10B, 10C).
